# EUROPEAN PATENT APPLICATION

(11) **EP 3 517 277 A1**
(43) Date of publication of application: **31.07.2019**
(21) Application number: 18153316.7
(22) Date of filing: 24.01.2018
(51) Int. Cl.: B29C 64/393, B33Y 50/02, B29C 64/153, B29C 64/165

(54) **LOAD GENERATION DEVICE FOR A POWDER MODULE OF AN APPARATUS FOR ADDITIVELY MANUFACTURING THREE-DIMENSIONAL OBJECTS**

(71) Applicant: CL Schutzrechtsverwaltungs GmbH, 96215 Lichtenfels (DE)
(72) Inventor: FISCHER, Tobias, 95466 Kirchenpingarten (DE); DILZER, Sven, 96120 Bischberg - Tütchengereuth (DE)
(74) Representative: Hafner & Kohl

(57) **Abstract**

Load generation device (15) for a powder module (3, 4) of an apparatus (1) for additively manufacturing three-dimensional objects, which powder module (3, 4) comprises a carrying device (11) with at least one moveable carrying element (13) with a drive device (12) adapted to drive the carrying element (13), wherein the load generation device (15) is separably connected or connectable with the powder module (3, 4) or the apparatus (1), in particular inside a process chamber (10) of the apparatus (1), wherein at least one load generation unit (18) is adapted to apply a force on the carrying element (13), wherein at least one force component is applied in the movement direction or against the movement direction of the carrying element (13).

## Description

The invention relates to a load generation device for a powder module of an apparatus for additively manufacturing three-dimensional objects, which powder module comprises a carrying device with at least one moveable carrying element with a drive device adapted to drive the carrying element, wherein the load generation device is separably connected or connectable with the powder module or the apparatus, in particular inside a process chamber of the apparatus.

Such apparatuses are generally known from prior art, in which a powder module is used that comprises a carrying device to carry a volume of (powdery) build material, e.g. a build module carrying a powder bed or a dose module carrying a volume of build material to provide the build material in the additive manufacturing process. Further, it is known from prior art that the positioning or a positioning accuracy of the respective carrying element of the powder module is crucial for process and object quality, since deviations in the position of the carrying element leads to deviations in the thickness of the layers of build material applied onto the carrying element or the volume of powder provided via a dose module.

As varying thicknesses of the layers of build material would lead to different mechanical properties in the object, a constant layer thickness has to be achieved. Therefore, it has to be ensured that the position of the carrying element is exactly met. Due to the increasing or decreasing weight of build material carried by the carrying element, deviations can result leading to the above-mentioned problems. Further, it has to be assured that deviations in the positioning of the carrying element do not occur when the load onto the carrying element changes.

To verify whether a predefined positioning accuracy is met or whether a defined position of the carrying element deviates from a position that is actually met under load, typically measurements are performed in a loaded state and an unloaded state of the carrying element of the powder module. To generate the load onto the carrying element usually weight is added or placed onto the carrying element, respectively, to "simulate" build material resting on the carrying element. The procedure of "loading" and "unloading" the powder module is time and work consuming as service personnel has to manually insert weighing elements, such as weight plates, and remove the weighing elements after the measurement is finished. Further, a defined amount of weighing elements has to be available at the machine site, in particular shipped to the machine that has to be tested.

As the build volumes of apparatuses for additively manufacturing of three-dimensional objects steadily increase, the number of weighing elements required to "simulate" an equivalent amount of build material resting on the carrying element also increases steadily. For example, a corresponding number of weighing elements is required to have a load of several 100 kg, in particular more than 250 kg, preferably more than 500 kg, to simulate the corresponding amount of build material that would rest on the carrying element in a regular additive manufacturing process. Thus, for service personnel it is troublesome, in particular time and work consuming, to transport the corresponding weighing elements to the apparatus, to load and unload the weighing elements into or out of the apparatus and transport the weighing elements back.

It is an object to provide an improved load generation device that allows for an improved measurement of the positioning accuracy of the carrying element.

The object is inventively achieved by a load generation device according to claim 1. Advantageous embodiments of the invention are subject to the dependent claims.

The load generation device described herein is a load generation device for an apparatus for additively manufacturing three-dimensional objects, e.g. technical components, by means of successive selective layerwise consolidation of layers of a powdered build material ("build material") which can be consolidated by means of an energy source, e.g. an energy beam, in particular a laser beam or an electron beam. A respective build material can be a metal, ceramic or polymer powder. A respective energy beam can be a laser beam or an electron beam. A respective apparatus can be a selective laser sintering apparatus, a selective laser melting apparatus or a selective electron beam melting apparatus, for instance. Alternatively, the successive layerwise selective consolidation of build material may be performed via at least one binding material. The binding material may be applied with a corresponding application unit and, for example, irradiated with a suitable energy source, e.g. a UV light source.

The apparatus may comprise a number of functional units which are used during its operation. Exemplary functional units are a process chamber, an irradiation device which is adapted to selectively irradiate a build material layer disposed in the process chamber with at least one energy beam, and a stream generating device, which is adapted to generate a gaseous fluid stream at least partly streaming through the process chamber with given streaming properties, e.g. a given streaming profile, streaming velocity, etc. The gaseous fluid stream is capable of being charged with non-consolidated particulate build material, particularly smoke or smoke residues generated during operation of the apparatus, while streaming through the process chamber. The gaseous fluid stream is typically inert, i.e. typically a stream of an inert gas, e.g. argon, nitrogen, carbon dioxide, etc.

The load generation device described herein is used to generate a load on the carrying element of a powder module to allow for the measurement of the carrying element in a loaded condition. In other words, a load onto the carrying element is "simulated" via the load generation device, wherein a corresponding load resulting from a defined amount of build material resting on the carrying element is applied onto the carrying element via the load generation device. Hence, the load generation device is connected or may be connected with the powder module or the apparatus, particularly inside a process chamber of the apparatus, to allow for a "loaded" measurement of the carrying element. Thus, it is also possible to perform the measurement of the carrying element, in particular the positioning accuracy of the carrying element, in a mounted state of the powder module, i.e. inside the process chamber of the apparatus.

The invention is based on the idea that the load generation device comprises at least one load generation unit that is adapted to apply an adjustable or adjusted force on the carrying element. The at least one load generation unit may therefore, be coupled with the carrying element in that the force is applied directed towards the carrying element, i.e. pushing onto the carrying element, or pulling on the carrying element, respectively. By having the load generation device and in particular the load generation unit adapted to apply an adjustable or adjusted force, the force resulting onto the carrying element can be adjusted dependent on the corresponding volume of build material that has to be "simulated". In other words, dependent on the volume of the build chamber or the dose chamber a corresponding force can be adjusted that matches the corresponding force an equivalent volume of build material resting on the carrying element would apply onto the carrying element.

Further, it is also possible to vary the load or the force generated via the load generation device dependent on the position the carrying element is positioned in. Powder modules, independent of whether they receive build material in the additive manufacturing process or provide build material, have different forces applied onto the carrying elements dependent on the position of the carrying element. For example, the weight of build material resting on the carrying element of a dose module will decrease with the carrying element being moved upwards from an initial position (while providing build material), since build material is removed from the carrying element of the dose module as the build material is used to generate new layers of build material on a build module. Accordingly, the load applied onto a carrying element of a build module also varies with the position of the carrying element of the build module, as the load applied via the volume of build material resting on the carrying element of the build module will increase as the carrying element is lowered receiving more build material as successively new layers of build material are applied onto the carrying element of the build module.

The invention in particular allows for simulating the layerwise application of build material, since the carrying element can be moved in steps, wherein the load generated via the load generation device can be adjusted in that in each step in which usually a new layer of build material is applied onto the carrying element (or removed from the carrying element) the load can be adjusted accordingly. Of course, it is also possible to move the carrying element in steps that correspond to the application of multiple layers of build material, wherein the load that is generated via the load generation device may be adjusted accordingly.

Dependent on the position of the load generation device, the characteristic of the powder module, in particular whether it is a dose module or a build module, or the basic mechanism the load is generated via the load generation device, it is possible to have a force component that is applied in the movement direction of the carrying element or against the movement direction of the carrying element. The term "movement direction of the carrying element" relates to the direction the carrying element is moved in an additive manufacturing process. If the powder module is built as a dose module, the corresponding movement direction of the carrying element would be upwards, since the carrying element of the dose module is moved upwards to provide fresh build material to be applied onto the build plane.

Correspondingly, if the powder module is built as a build module, the movement direction of the carrying element would be downwards, since the carrying element of the build module is moved downwards to receive fresh build material in that new layers of build material can be applied in the build plane. Basically, the load that is "simulated" via the load generation device would simulate the effects of gravity that result from the corresponding amount of build material resting on the carrying element. Thus, it is possible to have a force component "pushing" from above onto the carrying element or a force component "pulling" from beneath the carrying element to simulate the load. However, it is preferred to have the load generation device, in particular the load generation unit adapted to generate a force directed towards the carrying element, e.g. pushing onto the carrying element.

Of course, the load generation device can be connected with the powder module with the powder module not arranged inside the apparatus. Thus, the load generation device may for example be built as a separate device separated from the apparatus for additively manufacturing of three-dimensional objects. A corresponding powder module can therefore, be tested by having the powder module connected with the load generation device, wherein the load generation device generates the corresponding force on to the carrying element of the powder module, while the carrying element of the powder module is positioned in at least one position. Thus, a defined position can be compared with the position achieved in the "loaded state".

According to a preferred embodiment of the load generation device, at least one position determination device is provided that is adapted to determine a position and/or a travel path of the carrying element, in particular relative to an initial position of the carrying element. The position determination device allows for determining the position and/or the travel path of the carrying element, for example with respect to an initial position of the carrying element. Thus, a corresponding load can be applied onto the carrying element by the load generation device, wherein the position the carrying element is in can be determined via the position determination device. Thus, the carrying element can be moved in a predefined position, for example in steps corresponding to a desired layer thickness of layers applied onto the build module or corresponding to the build material provided in a dose plane (or multiple layer thicknesses), wherein the corresponding load applied onto the carrying element can be "simulated" via the load generation device. Of course, it is also possible to have the load generation device generate a force on the carrying element that corresponds to the maximum load (or a predefined ratio of the maximum load) that is applied onto the carrying element if the powder chamber (build chamber or dose chamber) is completely filled (or filled to a defined degree).

Preferably the determination of the position and/or the travel path of the carrying element and the comparison with set values of the position and/or the travel path or the determination whether deviations occur between the set position and the actually met position (and/or travel path) is performed over the entire travel path of the carrying element.

The at least one position determination device may be built as or may comprise at least one
- optical determination unit, in particular as laser interferometer, and/or
- capacitive determination unit and/or
- inductive determination unit and/or
- mechanical determination unit and/or
- ultrasonic determination unit and/or
- eddy current determination unit.

Thus, the position of the carrying element and/or the travel path of the carrying element may be determined in one or more different ways, in particular redundantly. For example, an optical determination unit may be used, such as a laser interferometer, to determine the actual position of the carrying element or, for example to determine the travel path with respect to an initial position. It is also possible to have a capacitive determination unit and/or an inductive determination unit to determine the position and/or the travel path of the carrying element. Additionally or alternatively, a mechanical determination unit, such as a tactile sensor or an ultrasonic determination unit can be used. Also, an eddy current determination unit can be used to detect the position and/or the travel path of the carrying element.

The load generation device may further comprise a holding unit that is adapted to hold the at least one position determination device. The load generation device may, for example, be connected to a structure that is not within the flow of force generated via the load generation device, in particular not in the same flow of force applied with the load generation unit onto the carrying element. Thus, it can be avoided that a load generated by the load generation device also affects the position of the holding unit and therefore, the position of the position determination device. Hence, influences on the determination of the position and/or the travel path can be avoided, since the support of the position determination device and the support of the load generation unit is decoupled with respect to the flow of forces generated on the carrying element.

For example, the position determination device may be connected or held via at least one structure or component of the apparatus, for example connected with an application unit adapted to apply build material in the build plane. Generally, the position of the position determination device can be chosen arbitrarily, as long as it is assured that the position determination device can correctly determine the position and/or the travel path of the carrying element.

Further, at least one load generation unit may comprise at least one actuator built as or comprising at least one
- hydraulical element and/or
- at least one pneumatic element and/or
- at least one mechanical element, in particular a spindle drive.

As described before, the load onto the carrying element can be applied via at least one load generation unit assigned to the load generation device. The at least one load generation device therefore, comprises at least one actuator that is built as or comprises at least one hydraulical element and/or at least one pneumatic element and/or at least one mechanical element, in particular a spindle drive. In other words, the actuator is used to apply the force onto the carrying element, wherein the force can be adjusted. The force may be generated in different ways, in particular hydraulically, pneumatically or mechanically.

The actuator may in particular be built as or comprise a hydraulic or a pneumatic cylinder, wherein a force that is applied onto the carrying element may be adjusted via the pressure in the hydraulic cylinder or the pneumatic cylinder.

Accordingly, the actuator may comprise a spindle drive, wherein dependent on the movement of the spindle drive a corresponding force can be adjusted that results on the carrying element.

The inventive load generation device may further be improved in that at least one load determination unit is provided that is adapted to determine a load applied onto the carrying element via at least one load generation unit. Hence, the load determination unit may be used to verify whether the correct load is applied onto the carrying element. Further, the load applied onto the carrying element may be adjusted dependent on the load determined via the load determination unit. Thus, a closed feedback loop can be achieved by having the load applied via the load generation unit and determined via the load determination unit. Further, if more than one load generation unit is used to apply load onto the carrying element, via a respective load determination unit it can be assured that all load generation units apply a defined load (in particular the same load) onto the carrying element.

According to another embodiment of the load generation device, at least one load generation unit may be connected with a positioning device, in particular comprising a spindle drive, adapted to position the load generation unit, in particular relative to the carrying element. The positioning device may be used to position the corresponding load generation unit of the load generation device relative to the carrying element. Particularly, the positioning device may be provided to contact the load generation unit with the carrying element. The positioning device may, for example be built as or comprise a quick release, in particular a clamping element and a guide element, such as a rail element.

The load generation unit may therefore, be moved relative to the carrying element as long as the clamp or the quick release is in an open state. After the load generation unit is in contact with the carrying element the quick release or the clamp can be closed. Subsequently, the load can be applied by the load generation unit. The positioning device therefore, allows to quickly and efficiently position the load generation unit, in particular to bring the load generation unit in contact with the carrying element.

Thus, the positioning or the contacting of the load generation unit with the carrying element does not have to be performed with the load generation unit itself. Hence, the travel path that has to be covered with the generation unit can be significantly smaller, since the load generation unit can be brought into contact with the carrying element via the positioning device to ensure that the load generation unit may only be used to apply the force onto the carrying element.

The load generation device may further comprise a control unit or be connected with a control unit that is adapted to control the load applied onto the carrying element via at least one load generation unit. Preferably, the load generation unit receives data determined via a load determination unit. Thus, the load applied via at least one, in particular multiple, load generation units can be controlled via the control unit. Preferably every load generation unit applies the same load onto the carrying element. By doing so it can be assured that the load distribution onto the carrying element is even and that the carrying element is not unevenly loaded. An uneven load distribution may lead to errors in the positioning of the carrying element relative to the powder chamber and may even harm structural elements of the powder module, such as supports or guides the carrying element interacts with. The control unit is in particular adapted to control the force applied via each load generation unit. Preferably, the control unit may match the force applied via all load generation units.

According to another embodiment of the load generation device, the control unit may be adapted to control the force applied via at least one load generation unit dependent on a preset parameter, in particular dependent on a powder chamber volume and/or a build material parameter, preferably the density of the build material used in the powder module. Dependent on the preset parameter the control unit may control the force that is applied via the at least one load generation unit. In the preset parameter a powder chamber volume and/or a build material parameter may be defined in that the load that is generated via the at least one load generation unit "simulates" the load that would be applied with the corresponding build material and the corresponding amount of build material resting on the carrying element.

Thus, preferably the preset parameter comprises information regarding the density or the specific material that is used in the additive manufacturing process. Further, the size of the powder chamber may be defined in the process parameter to take into calculation how much build material is applied onto the carrying element, in particular dependent on the position of the carrying element relative to the powder chamber. Additionally, classes can be defined, e.g. for different build materials or sizes of powder chamber volumes, for example dependent on a material density or a size of the powder chamber. Thus, different materials and different powder chambers could be assigned to the same class dependent on their size and density, for instance.

The load generation device preferably comprises four load generation units that are preferably arranged symmetrical with respect to the carrying element. Thus, a symmetrical, e.g. a rectangular arrangement of the load generation units is feasible to assure that the load applied onto the carrying element is evenly distributed.

Besides, the invention relates to an apparatus for additively manufacturing three-dimensional objects by means of successive layerwise selective irradiation and consolidation of layers of a build material which can be consolidated by means of an energy source, which apparatus comprises a powder module comprising a carrying device with a drive device adapted to drive a carrying element, wherein a load generation device is provided, in particular an inventive load generation device as described before, that is separably connected or connectable with the powder module or the apparatus, in particular inside a process chamber of the apparatus, which load generation device comprises at least one load generation unit adapted to apply an adjustable or adjusted force on the carrying element.

Additionally, the invention relates to a method for operating at least one load generation device, in particular an inventive load generation device as described before, for a powder module for an apparatus for additively manufacturing three-dimensional which powder module comprises a carrying device with at least one moveable carrying element with a drive device adapted to drive the carrying element, wherein the load generation device is separably connected or connectable with the powder module or the apparatus, in particular inside a process chamber of the apparatus, wherein an adjustable or adjusted force is applied onto the carrying element via at least one load generation unit.

To measure the positioning accuracy, in particular the position and/or the travel path of the carrying element with respect to an initial position of the carrying element, the load generation device may be connected with a powder module, in particular the load generation device may be mounted inside a process chamber of an apparatus for additively manufacturing of three-dimensional objects. Therefore, the load generation device may be inserted into a process chamber of the apparatus and mounted to the structure of the apparatus, in particular mounted on a process plane of the apparatus. Besides, the load generation device may be connected with a separate powder module, for example attached to the top of a powder module.

Subsequently, at least one measurement of at least one position and/or a travel path of the carrying element of the powder module may be performed. Preferably, multiple positions of the carrying element are measured, wherein the measurement is performed in a loaded state of the carrying element, wherein a corresponding force is applied onto the carrying element via the load generation device and the measurement is also performed in an unloaded state of the carrying element, wherein no force is applied onto the carrying element via the load generation device. Thus, deviations between the loaded state and the unloaded state of the carrying element, in particular relating to the positioning accuracy of the carrying element can be derived, preferably for multiple positions of the carrying element.

After the measurement of the carrying element is finished, the load generation device may be disconnected from the powder module, in particular the load generation device may be removed from the process chamber of the apparatus.

Hence, at least one measurement of at least one position of the carrying element may be performed with the carrying element unloaded and with the force applied onto the carrying element. Therefore, a direct comparison between the unloaded state and a loaded state, in which the load generation device is used to apply a corresponding force onto the carrying element, can be made. The load may be adjusted dependent on the powder chamber volume and/or a build material parameter, in particular the density of the build material. The build material parameter, for example the density of the build material and the volume of the powder chamber define the load that is applied in each position of the carrying element.

Since the carrying element delimits the powder chamber volume bottom sides, varying the position of the carrying element will increase or decrease the powder chamber volume. By taking into calculation what type of build material is used, in particular the density of the build material and the actual size of the powder chamber volume for the corresponding position, the correct force can be applied onto the carrying element or, in other words, the force that would be applied onto the carrying element by the corresponding amount of build material resting on the carrying element can be "simulated" via the load generation device.

Further, a measurement of the position of the carrying element is performed in at least two different positions, in particular over an entire travel path of the carrying element. Preferably, the distance between the at least two positions depends on a layer thickness of a layer of build material that is achieved in the additive manufacturing process. Of course, also multiple layer thicknesses can be taken into calculation, as positions that are spaced via (integer) multiples of layer thicknesses can also be measured. Thus, the additive manufacturing process for the powder module can be simulated as the carrying element is lowered or raised dependent on the amount of build material that is applied in the build plane or that has to be provided via a corresponding dose module.

Thus, dependent on the amount of build material that is provided by the dose module and the layer thickness or the number of layers that is applied onto the build plane, the distance between two measurement positions can be varied. By measuring all positions over the entire travel path of the carrying element, conclusions on occurring deviations along the travel path can be made. In particular it can be assured that the positioning accuracy is met over the entire travel path of the carrying element.

Exemplary embodiments of the invention are described with reference to the Fig. The Fig. are schematic diagrams, wherein
- Fig. 1: shows an inventive apparatus with an inventive load generation device;
- Fig. 2: shows the inventive load generation device of Fig. 1 in detail;
- Fig. 3: shows a base plate for an inventive load generation device;
- Fig. 4: shows a detail of a holding structure for the inventive load generation device of Fig. 1, 2; and
- Fig. 5: shows a detail of a receiving element for the inventive load generation device of Fig. 1, 2.

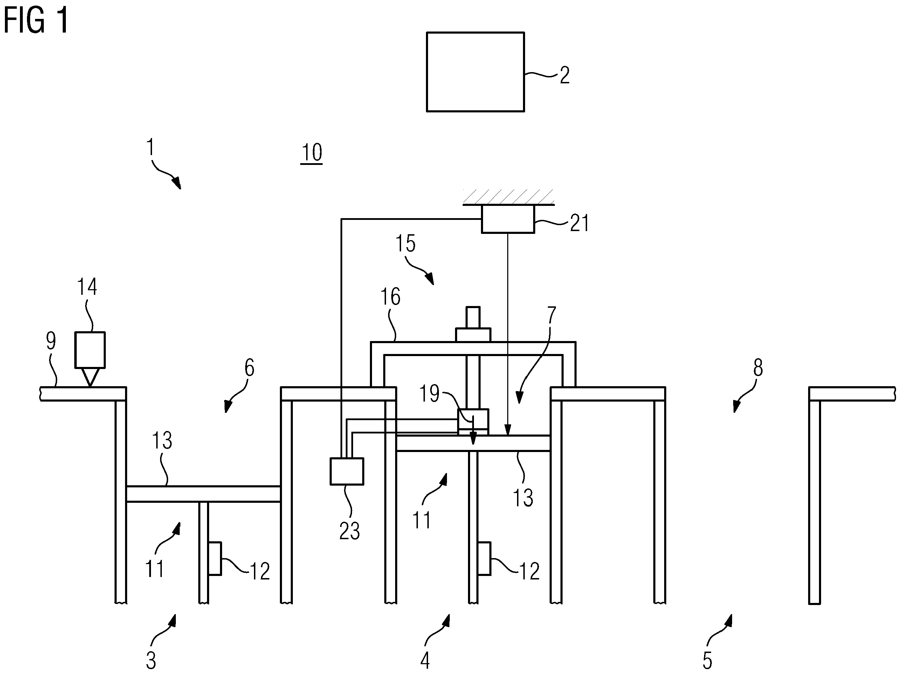

Fig. 1 shows an apparatus 1 for additively manufacturing of three-dimensional objects by means of successive layerwise selective irradiation and consolidation of layers of a build material which can be consolidated by means of an energy source, for example an irradiation device 2 comprising a beam generating unit and a beam guiding unit. Of course, any arbitrary energy source that is adapted to selectively consolidate the build material can be used.

The apparatus 1 comprises a dose module 3, a build module 4 and an overflow module 5. As can be derived from Fig. 1, the dose module 3, the build module 4 and the overflow module 5 are arranged in corresponding openings 6, 7 and 8 in a process plane 9. The process plane 9 delimits a process chamber 10 of the apparatus 1 bottom sides. As can further be derived from Fig. 1, the dose module 3 and the build module 4 each comprise a carrying device 11 with a drive device 12 that is adapted to drive a carrying element 13 of the carrying device 11. In a regular operation of the apparatus 1, the carrying element 13 of the dose module 3 carries fresh build material that is provided by the dose module 3 in a dose plane that is arranged in the opening 6 of the process plane 9. Accordingly, the carrying element 13 of the build module 4 carries the build material arranged in the build plane which is arranged in the opening 7 of the process plane 9.

In other words, build material can be picked up in the dose plane, for example via an application unit 14, and can be conveyed to the build plane. Thus, build material is successively conveyed from the dose module 3 to the build module 4. Fig. 1 further shows that upon an upward movement of the carrying element 13 of the dose module 3 build material can be supplied to the application unit 14 which build material can be conveyed to the build module 4, in particular to the build plane (arranged in the opening 7 of the process plane 9). Therefore, a precise positioning of the carrying element 13 of the dose module 3 and of the build module 4 is significant for the process quality and the object quality of the object that is additively manufactured. Thus, a defined positioning accuracy has to be met.

To ensure the positioning accuracy of the carrying element 13 is met, the apparatus 1 comprises a load generation device 15 that is connected on top of the build module 4. The load generation device 15 is provided for generating a load onto the carrying element 13 to "simulate" build material resting on the carrying element 13. Self-evidently, the load generation device 15 can also be connected to the top of the dose module 3.

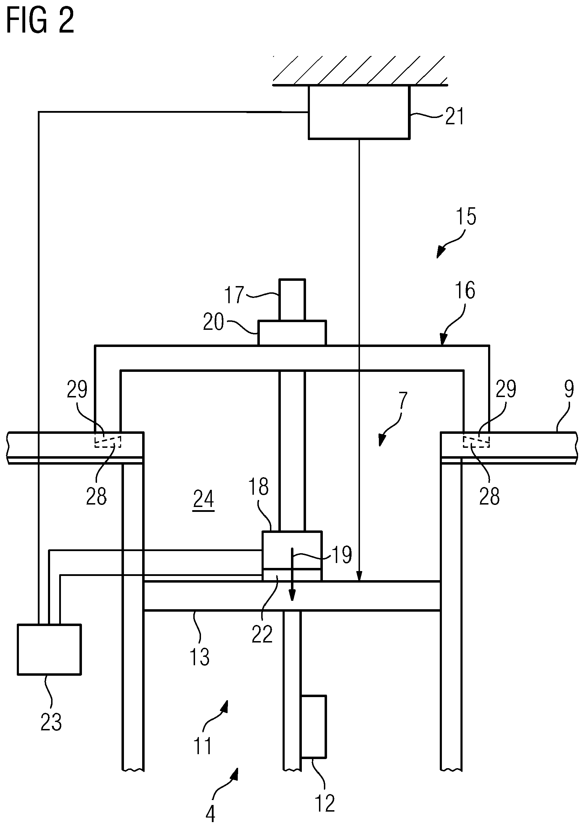

Fig. 2 shows the specific setup of the load generation device 15. The load generation device 15 comprises a holding structure 16 with which the load generation device 15 is connected to the top of the build module 4. Connected with the holding structure 16 is a positioning device 17 that connects a load generation unit 18 of the load generation device 15 with the holding structure 16. The load generation unit 18 is adapted to generate a load onto the carrying element 13 (as indicated by arrow 19). To position the load generation unit 18, in particular to contact the load generation unit 18 with the carrying element 13, the relative position of the positioning device 17 relative to the holding structure 16 can be adjusted, preferably via a quick adjusting means, such as a quick release 20 that is adapted to clamp the positioning device 17.

Thus, the load generation unit 18 can be quickly adjusted to the position of the carrying element 13 in which the load generation unit 18 is adapted to apply a force as indicated by arrow 19. The load generation device 15 further comprises a position determination device 21 that is adapted to determine the position of the carrying element 13 and/or to determine a travel path of the carrying element 13 with respect to an initial position, for example the process plane 9.

The load generation device 15 further comprises a load determination unit 22 that is arranged between the load generation unit 18 and the carrying element 13. The load determination unit 22 is adapted to determine the load that is applied via the load generation unit 18 onto the carrying element 13. Additionally, the load generation device 15 comprises a control unit 23 that is adapted to receive a load determined via the load determination unit 22 and the position and/or the travel path determined by the position determination unit 21. Further, the control unit 23 is adapted to control the load that is applied via the load generation unit 18.

Dependent on a current powder chamber volume 24 that is delimited by the powder chamber of the build module 4 (or the dose module 3), in particular delimited by powder chamber walls and by the carrying element 13, and at least one a predefined parameter of build material used in the additive manufacturing process, the control unit 23 may adjust the force that is applied via the load generation unit 18 onto the carrying element 13. Thus, the load generation device 15 is adapted to "simulate" the force that would be applied on the carrying element 13 due to the corresponding amount of build material resting on the carrying element 13 with the carrying element 13 in the same position during a regular manufacturing process.

Preferably, the position of the carrying element 13 is determined for multiple positions, in particular over the entire travel path of the carrying element 13 that is used in the additive manufacturing process. Each position may be determined in an unloaded state and in a loaded state of the carrying element 13, wherein the load generation unit 18 is adapted to generate the force in the loaded state and wherein the force is not applied onto the carrying element 13 in the unloaded state. Hence, a comparison between the corresponding positions in the loaded state and in the unloaded state can be achieved to monitor whether deviations in the positioning accuracy occur with the carrying element 13 under load.

The distance between two positions in which the measurement is performed preferably depends on a layer thickness of build material used in the additive manufacturing process. In other words, the steps the carrying element 13 is moved and measured depend on the steps the carrying element 13 would be moved in the corresponding additive manufacturing process. Thus, the position of the carrying element 13 of the dose module 3 depends on the amount of build material that has to be provided in the dose plane. Accordingly, the size of the steps or the distance between two positions of the carrying element 13 of the build module 4 corresponds to the steps the carrying element 13 is lowered in the additive manufacturing process providing space for fresh build material to be applied in the build plane.

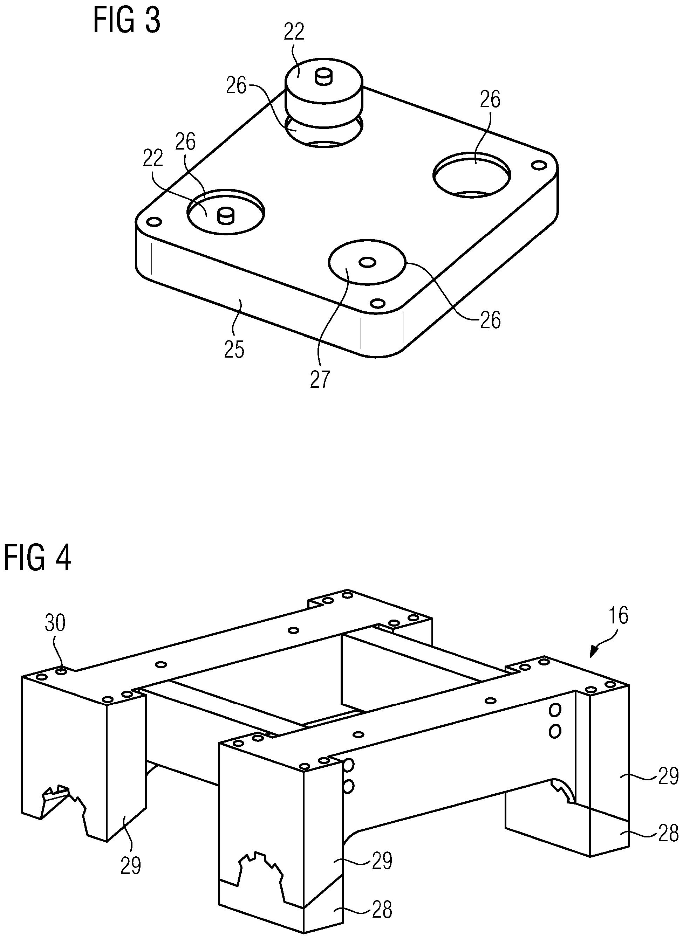

Fig. 3 shows a baseplate 25 that comprises four recesses 26 in which load determination units 22 can be received. Thus, the baseplate 25 may be used with a load generation device 15 comprising four load generation units 18, as described above. The recesses 26 and the load determination units 22 comprise a cylindrical shape in the exemplary embodiment depicted in Fig. 3. However, any other arbitrary shape or cross-section, such as a rectangular cross-section is also possible. The baseplate 25 can be arranged on the carrying element 13 to induce the load generated by the load generation unit 18. It is also possible to have the carrying element 13 build as baseplate comprising the recesses 26. In this case, the recesses 26 in the carrying element 13 may be filled with corresponding elements in a regular mode of operation to fill the recesses 26 and prevent build material from entering the recesses 26 in the additive manufacturing process.

Further, load transmission elements 27, which may be built as circular or annular disk or cylinder may be provided for transmitting the load generated via one of the load generation units 18 to the load determination units 22. In the exemplary embodiment depicted in Fig. 3 one recess is empty, one load determination unit 22 is about to be inserted into the recess 26, one load determination unit 22 is arranged inside the recess 26 and one recess 26 is filled with a load determination unit 22 which is covered with a load transmission element 27. Of course, in operation of the load generation unit 15, all recesses 26 comprise a load determination unit 22 connected with a corresponding load generation unit 18, wherein each load determination unit may be covered with the corresponding load transmission element 27 (optional). Hence, the load transmission elements 27 may be arranged between the load generation units 18 and the load determination units 21.

Fig. 4 shows the holding structure 16, as depicted in Fig. 1, 2 in detail. The holding structure 16 generally comprises a rectangular shape, wherein the holding structure 16 can be mounted with receiving elements 28 that are arranged in the process plane 9, for example connected to a frame of the apparatus 1. Preferably, the receiving elements 28 are arranged in recesses in the process plane 9 that can be covered with corresponding cover elements in a regular mode of operation of the apparatus 1 to prevent build material from entering the corresponding recesses.

As can further be derived from Fig. 4, the receiving elements 28 are engaged with the holding structure 16 via a positive locking fit connecting the receiving elements 28 with connection sections 29 of the holding structure 16. Thus, with the holding structure 16 mounted on the receiving elements 28, the respective connection means generate a positive locking fit that positions the holding structure 16 precisely inside the process chamber 10 of the apparatus 1. The connection sections 29 and the receiving elements 28 further comprise a sloped surface which further enhances the accurate positioning of the holding structure 16. Of course, additional fastening means, such as screws, can be used to fasten the connection between the connection sections 29 and the corresponding receiving elements 28, as indicated via through holes 13. Of course, the cross section of the connection sections and/or the receiving elements 28 can be of any arbitrary shape.

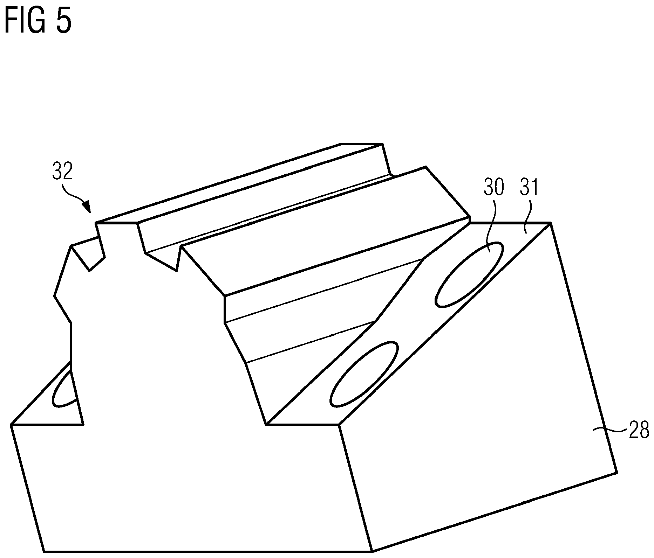

Fig. 5 shows a detail view of one of the receiving elements 28 that can be preferably integrated into the process plane 9. The receiving element 28 comprises a sloped surface 31 in which holes 30 are provided for receiving a fastening means that secures a connection of the connection section 29 and the receiving element 28 in an engaged condition of the holding structure 16 of the load determination unit 15. Due to its characteristic shape, in particular geometrical features 32, it is assured that only the corresponding holding structure 16 can be mounted properly on the provided receiving elements 28. Of course, any other arbitrary shape can be used to connect the receiving element 28 with a corresponding connection section 29. For example, if an integration into the process plane 9, or a recess arranged in the process plane 9, is not necessary, a dovetail connection can also be used.

## Claims

1. Load generation device (15) for a powder module (3, 4) of an apparatus (1) for additively manufacturing three-dimensional objects, which powder module (3, 4) comprises a carrying device (11) with at least one moveable carrying element (13) with a drive device (12) adapted to drive the carrying element (13), wherein the load generation device (15) is separably connected or connectable with the powder module (3, 4) or the apparatus (1), in particular inside a process chamber (10) of the apparatus (1), **characterized by** at least one load generation unit (18) adapted to apply a force on the carrying element (13), wherein at least one force component is applied in the movement direction or against the movement direction of the carrying element (13).

2. Load generation device according to claim 1, **characterized by** at least one position determination device (21) adapted to determine a position and/or a travel path of the carrying element (13), in particular relative to an initial position of the carrying element (13).

3. Load generation device according to claim 2, **characterized in that** the at least one position determination device (21) is built as or comprises at least one
- optical determination unit, in particular as laser interferometer, and/or
- capacitive determination unit and/or
- inductive determination unit and/or
- mechanical determination unit and/or
- ultrasonic determination unit and/or
- eddy current determination unit.

4. Load generation device according to one of the preceding claims, **characterized by** a holding unit adapted to hold the at least one position determination device (21).

5. Load generation device according to one of the preceding claims, **characterized in that** at least one load generation unit (18) comprises at least one
- hydraulic element and/or
- at least one pneumatic element and/or
- at least one mechanic element, in particular a spindle drive.

6. Load generation device according to one of the preceding claims, **characterized by** at least one load determination unit (22) adapted to determine a load applied onto the carrying element (13) via at least one load generation unit (18).

7. Load generation device according to one of the preceding claims, **characterized in that** at least one load generation unit (18) is connected with a positioning device (17), in particular comprising a spindle drive, adapted to position the load generation unit (18), in particular relative to the carrying element (13).

8. Load generation device according to one of the preceding claims, **characterized by** a control unit (23) adapted to control the load applied onto the carrying element (13) via at least one load generation unit (18).

9. Load generation device according to claim 8, **characterized in that** the positioning device (17) is adapted to position the at least one load generation unit (18) dependent on the load applied onto the carrying element (13) that is controlled via the control unit (23).

10. Load generation device according to claim 9, **characterized in that** the positioning device (17) and/or the control unit (23) are adapted to control the force applied via each load generation unit (18), in particular adapted to match the force applied via all load generation units (18).

11. Load generation device according to claim 9 or 10, **characterized in that** the control unit (23) is adapted to control the force applied via at least one load generation unit (18) dependent on a preset parameter, in particular dependent on a powder chamber volume (24) and/or a build material parameter, preferably the density of the build material used in the powder module (3, 4).

12. Load generation device according to one of the preceding claims, **characterized in that** the load generation device (15) comprises four load generation units (18), preferably arranged symmetrical with respect to the carrying element (13).

13. Apparatus (1) for additively manufacturing three-dimensional objects by means of successive layerwise selective irradiation and consolidation of layers of a build material which can be consolidated by means of an energy source, which apparatus (1) comprises a powder module (3, 4) comprising a carrying device (11) with a drive device (12) adapted to drive a carrying element (13), **characterized by** a load generation device (15), in particular a load generation device (15) according to one of the preceding claims, separably connected or connectable with the powder module (3, 4) or the apparatus (1), in particular inside a process chamber (10) of the apparatus (1), which load generation device (15) comprises at least one load generation unit (18) adapted to apply a force on the carrying element (13), wherein at least one force component is applied in the movement direction or against the movement direction of the carrying element (13).

14. Method for operating at least one load generation device (15), in particular a load generation device (15) according to one of the claims 1 to 12, for a powder module (3, 4) for an apparatus (1) for additively manufacturing three-dimensional which powder module (3, 4) comprises a carrying device (11) with at least one moveable carrying element (13) with a drive device (12) adapted to drive the carrying element (13), wherein the load generation device (15) is separably connected or connectable with the powder module (3, 4) or the apparatus (1), in particular inside a process chamber (10) of the apparatus (1), **characterized in that** a force is applied onto the carrying element (13) via at least one load generation unit (18), wherein at least one force component is applied in the movement direction or against the movement direction of the carrying element (13).

15. Method for operating at least one load generation device (15), in particular a load generation device (15) according to one of the claims 1 to 12, for a powder module (3, 4) for an apparatus (1) for additively manufacturing three-dimensional which powder module (3, 4) comprises a carrying device (11) with at least one moveable carrying element (13) with a drive device (12) adapted to drive the carrying element (13), **characterized by** the steps:
- the load generation device (15) is connected to a powder module (3, 4), in particular inside a process chamber (10) of an additive manufacturing apparatus (1)
- a force is applied onto the carrying element (13) of the powder module (3, 4) via at least one load generation unit (18) of the load generation device (15), wherein at least one force component is applied in the movement direction or against the movement direction of the carrying element (13)
- a position and/or a travel path of the carrying element (13) is determined for at least one position of the carrying element (13), preferably in a loaded and an unloaded state
- the load generation device (15) is disconnected from the powder module (3, 4), in particular removed from a process chamber (10) of the additive manufacturing apparatus (1)
